# FASCICULE DE BREVET EUROPEEN

(11) **EP 1 600 730 B1**
(45) Date de publication et mention de la délivrance du brevet: **13.06.2007**
(21) Numéro de dépôt: 05290933.0
(22) Date de dépôt: 28.04.2005
(51) Int. Cl.: G01B 7/28, G01B 21/20, B23Q 35/12

(54) **Appareil de lecture de contour comportant un palpeur mobile en rotation**
Vorrichtung zum Abtasten von Konturen mittels einer drehenden beweglichen Prüfspitze
Contour measurement apparatus comprising a rotating mobile probe

(30) Priorité: 28.05.2004 FR 0405818
(43) Date de publication de la demande: 30.11.2005
(73) Titulaire: ESSILOR INTERNATIONAL (COMPAGNIE GENERALE D'OPTIQUE), 94220 Charenton le Pont (FR)
(72) Inventeur: Nauche, Michel, 95230 Soisy-sous-Montmorency (FR); Jouard, Ludovic, 75014 Paris (FR)
(74) Mandataire: Lepelletier-Beaufond, François

(56) Documents cités:
- EP-A- 1 353 215
- US-A- 5 121 550

## Description

L'invention concerne le domaine général des appareils de mesure dimensionnelle intervenant dans la fabrication d'une paire de lunettes adaptée à un porteur particulier.

L'invention concerne plus particulièrement un appareil de lecture de contour adapté, à l'aide d'un palpeur, à déterminer la forme d'un élément disposé sur un support. L'élément palpé est en général un cercle de monture de lunettes ou un gabarit de lentille ophtalmique.

Un tel appareil est par exemple utilisé pour déterminer la forme du drageoir d'un cercle de monture, c'est-à-dire de la rainure qui parcourt l'intérieur du cercle de monture et qui permet la mise en position d'une lentille ophtalmique dans ce cercle de monture. A cet effet, le palpeur est inséré dans le drageoir et effectue le relevé des coordonnées d'un certain nombre de points parcourus de manière à pouvoir mémoriser une image numérique du profil du drageoir. Une lentille ophtalmique brute pourra ensuite être taillée selon les dimensions du drageoir pour pouvoir s'insérer parfaitement dans le cercle de monture.

On connaît du document FR 2 652 893 un tel appareil de lecture de contour comportant une table de soutien munie de moyens de maintien pour l'objet à palper. Un plateau circulaire est monté tournant par rapport à la table de soutien et supporte une glissière sur laquelle est monté mobile un chariot rattaché à un palpeur.

Cet appareil est prévu notamment pour effectuer des relevés de contour en coordonnées polaires, c'est-à-dire que pour chaque point palpé dont les coordonnées sont à définir, la position angulaire du plateau circulaire est relevée, ainsi que la position du chariot sur la glissière.

On connaît également du document US 5 121 550 un dispositif pour relever des contours, comportant un plateau tournant par rapport à un support ainsi qu'un palpeur monté d'une part en translation rectiligne le long d'une glissière montée sur le plateau tournant et d'autre part monté en translation verticale par rapport audit chariot.

Le dispositif décrit peut ainsi intervenir en coordonnées cylindriques dont la dimension angulaire (θ) correspond à la rotation du plateau tournant, la dimension radiale (ρ) correspond au mouvement de translation du chariot sur la glissière et la hauteur (Z) correspond au mouvement vertical du palpeur. La palette se déplace dans le fond du drageoir du cercle et reste en contact avec celui-ci sous l'effet d'un effort radial appliqué pour maintenir la palette contre le drageoir.

On connaît de plus du document US 6 243 960 un dispositif pour relever le contour des cercles d'une monture de lunettes comportant un actionneur muni d'un dispositif de rotation sur lequel est monté un mécanisme à pivot supportant le palpeur et permettant à ce dernier de relever un contour grâce à un mouvement de rotation combiné à un mouvement de pivotement selon un axe transversal à l'axe du dispositif de rotation.

Le but de l'invention est d'améliorer ce type d'appareil de lecture de contour.

A cet effet, l'invention vise un appareil de lecture de contour, notamment pour cercle de monture de lunettes, comportant un support pour le maintien de l'article dont le contour est à lire et un plateau tournant monté en rotation par rapport au support autour d'un axe de rotation, ce plateau tournant portant un sous-ensemble de lecture qui comporte un palpeur mobile d'une part selon une direction parallèle à l'axe de rotation du plateau tournant et d'autre part selon un plan transversal à l'axe de rotation du plateau tournant,
cet appareil de lecture étant caractérisé en ce que le sous-ensemble de lecture comporte en outre :
un axe porteur saillant transversalement par rapport à la surface du plateau tournant ;
un bras porteur qui, à l'une de ses extrémités, est monté tournant autour dudit axe porteur et sur lequel est embarqué, à l'autre de ses extrémités, ledit palpeur ;
grâce à quoi le palpeur est mobile par rapport au plateau tournant suivant un trajet en arc de cercle centré sur ledit axe porteur.

Un tel appareil de lecture est adapté à commander les mouvements du palpeur selon une rotation autour de l'axe du plateau tournant, selon une rotation autour d'un axe décalé par rapport à l'axe du plateau tournant, et selon une translation le long d'un axe parallèle à l'axe du plateau tournant.

Cette combinaison de deux rotations permet un gain en fiabilité et une réduction de coût du sous-ensemble de lecture.

De plus, le palpeur est décalé par rapport à l'axe autour duquel s'effectue son mouvement selon le plan transversal à l'axe de rotation du plateau tournant. La poussière et les salissures susceptibles de tomber dans le sous-ensemble de lecture au droit du palpeur n'ont donc aucune incidence sur les parties mobiles.

Néanmoins, pour protéger efficacement le sous-ensemble de lecture, le plateau tournant peut comporter sur sa surface une lumière semi-circulaire centrée autour de l'axe porteur, le bras porteur étant disposé de sorte que le palpeur traverse la lumière semi-circulaire.

Le bras porteur est ainsi adapté à ce que les moyens d'entraînement soient disposés en vis-à-vis de la lumière semi-circulaire quelle que soit la position angulaire du bras porteur autour de l'axe porteur.

Cette lumière circulaire peut s'étendre entre le centre de rotation du plateau tournant et sa périphérie.

Selon un mode de réalisation, le bras porteur coopère avec des moyens d'entraînement angulaires adaptés à commander le mouvement du palpeur selon ledit plan transversal à l'axe de rotation du plateau tournant.

Le mouvement du palpeur selon le plan transversal à l'axe de rotation du plateau tournant peut ainsi être piloté.

Les moyens d'entraînement angulaires peuvent de plus comporter un bras de guidage dont une extrémité est centrée sur l'axe porteur et l'autre extrémité comporte des moyens de commande coopérant avec l'ensemble formé par le palpeur et le bras porteur.

Ces moyens de commande permettent un guidage embarqué du palpeur.

L'entraînement du palpeur par le bras de guidage peut s'effectuer grâce à un roulement, un appui fixe, ou les deux.

Le bras de guidage peut avantageusement être centré sur l'axe porteur par l'intermédiaire d'un roulement.

Par ailleurs, le bras de guidage peut comporter une portion semi-circulaire centrée autour de l'axe porteur. Un moteur d'entraînement angulaire peut également coopérer avec ladite portion semi-circulaire pour entraîner en rotation autour de l'axe porteur le bras de guidage.

Ces dispositions permettent une motorisation du bras de guidage à moindre coût, la portion semi-circulaire pouvant être dentée et pouvant engrener avec un pignon du moteur d'entraînement angulaire.

Alternativement, la portion semi-circulaire peut être dentée et peut engrener avec un pignon intermédiaire qui engrène lui-même avec un pignon du moteur d'entraînement angulaire. Le corps du moteur est ainsi dégagé des autres parties mobiles du sous-ensemble de lecture.

Dans le but d'effectuer les relevés de position nécessaires au palpage du contour, l'appareil de lecture de contour peut comporter en outre un codeur coopérant avec le bras de guidage pour repérer la position angulaire du bras de guidage autour de l'axe porteur.

Selon une caractéristique préférée, le bras porteur coopère avec des moyens d'entraînement axial adaptés à commander le mouvement du palpeur selon ladite direction parallèle à l'axe de rotation du plateau tournant. Le bras porteur combine ainsi les mouvements du palpeur selon une direction parallèle et selon un plan transversal à l'axe de rotation du plateau tournant.

Selon une autre caractéristique préférée, les moyens d'entraînement axial comportent un moteur d'entraînement axial adapté à déplacer le bras porteur le long de l'axe porteur. Le guidage unique apporté par l'axe porteur permet ainsi deux mouvements différents du palpeur grâce à une liaison pivot-glissant entre le bras porteur et l'axe porteur.

Un gain en fiabilité supplémentaire est ainsi obtenu, de même qu'une réduction des coûts de fabrication.

Avantageusement, le moteur d'entraînement axial comporte un pignon engrenant sur une crémaillère solidaire d'une bague rattachée au bras porteur et entourant l'axe porteur.

Le mouvement du palpeur peut de plus être asservi. A cet effet, le moteur d'entraînement axial est adapté à positionner le bras porteur le long de l'axe porteur selon une consigne variable, de manière à asservir le mouvement du palpeur selon un axe parallèle à l'axe de rotation du plateau tournant, suivant la forme du profil palpé.

Pour une mesure plus précise, le moteur d'entraînement axial peut être adapté à réaliser une compensation de la force de gravité. Le moteur d'entraînement axial est pour cela commandé pour exercer en permanence une force d'intensité égale et de sens contraire à la force de gravité s'appliquant sur l'ensemble formé par le bras porteur et le palpeur.

Par ailleurs, le moteur d'entraînement axial peut être monté sur le bras de guidage en tant que motorisation embarquée.

Egalement pour effectuer les repérages de position nécessaires au palpage, l'appareil de lecture peut comporter en outre un codeur coopérant avec le bras porteur pour repérer la position axiale du bras porteur le long de l'axe porteur.

Une solution simple et efficace pour définir l'axe porteur consiste en un arbre fixé perpendiculairement à la surface du plateau tournant.

Cet arbre peut être de section prismatique adaptée à entraîner le bras porteur en rotation autour de l'axe porteur.

Avantageusement, le palpeur, l'axe porteur et l'axe de rotation du plateau tournant sont parallèles.

Selon un mode de réalisation, le bras porteur est centré sur l'axe porteur par l'intermédiaire d'une douille à billes permettant la translation et la rotation du bras porteur par rapport à l'axe porteur.

Une telle douille à billes permet de réaliser à moindre coût un pivot glissant.

En ce qui concerne le mouvement de rotation du sous-ensemble de lecture, le plateau tournant peut être adapté à être guidé en rotation par des galets et éventuellement à être entraîné par ceux-ci.

Alternativement, le plateau tournant peut être adapté à être entraîné en rotation par un pignon engrenant sur une crémaillère circulaire fixée sur le pourtour du plateau tournant.

D'autres caractéristiques et avantages de l'invention apparaissent à la lumière de la description qui va suivre d'un mode de réalisation préféré donné à titre d'exemple non limitatif, description faite en référence aux dessins annexés dans lesquels :
- la figure 1 est une vue en perspective d'un appareil de lecture de contour selon l'invention ;
- la figure 2 est similaire à la figure 1, l'appareil de lecture de contour recevant une monture de lunettes dont la forme des cercles est destinée à être relevée par le palpeur ;
- la figure 3 est une vue de dessus de l'appareil de la figure 1, les capots supérieurs ayant été enlevés ;
- la figure 4 représente en perspective le plateau tournant extrait de l'appareil de la figure 1 ;
- les figures 5 et 6 sont des vues en perspective du dessous du plateau tournant de la figure 4, ces figures 5 et 6 permettant de voir selon deux angles différents le sous-ensemble de lecture porté par le plateau tournant ;
- la figure 7 est un schéma cinématique représentant les éléments du sous-ensemble de lecture et leurs liaisons mutuelles ;
- la figure 8 est une vue similaire à la figure 7 mais pour un autre mode de réalisation ; et
- la figure 9 est une vue similaire à la figure 8 mais pour un autre mode de réalisation.

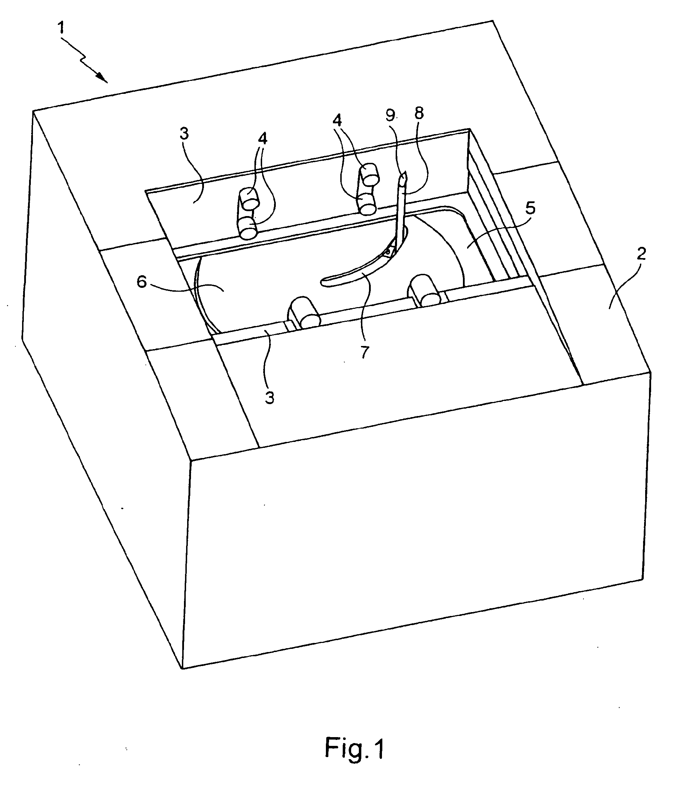

La figure 1 est une vue générale d'un appareil de lecture de contour 1 tel qu'il se présente à son utilisateur. Cet appareil 1 comporte un capot supérieur 2 recouvrant l'ensemble de l'appareil à l'exception d'une portion supérieure centrale.

L'appareil 1 comporte également un jeu de deux mâchoires 3 dont au moins une des mâchoires 3 est mobile par rapport à l'autre de manière que les mâchoires 3 puissent être rapprochées ou écartées l'une de l'autre pour former un dispositif de serrage. Chacune des mâchoires 3 est de plus munie de deux pinces formées chacune de deux plots 4 mobiles pour être adaptés à serrer entre eux une pièce.

Dans l'espace laissé visible par l'ouverture supérieure centrale du capot 2, un châssis 5 est visible. Un plateau tournant 6 est monté tournant par rapport au châssis 5. Ce plateau tournant 6 comporte une lumière 7 oblongue en forme d'arc de cercle à travers laquelle saille un palpeur 8 muni à son extrémité d'une pointe de palpage 9.

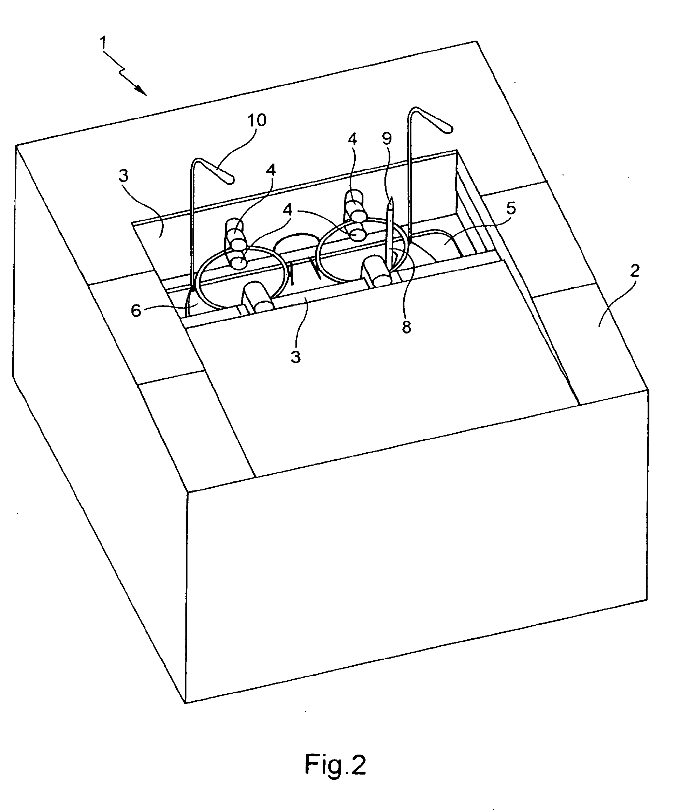

L'appareil 1 de la figure 1 est destiné recevoir une monture 10 conformément à la figure 2.

Sur cette figure 2, les mâchoires 3 ont été rapprochées pour maintenir horizontalement la monture 10 et les pinces formées des plots 4 ont été refermées sur les cercles de monture. Chacun des cercles de la monture 10 est ainsi prêt à être palpé selon un trajet démarrant par l'insertion du palpeur entre deux plots 4 puis le long du drageoir de la monture 10 pour couvrir toute la circonférence du cercle de monture.

Notons que la machine 1 est dans cet exemple équipée de mâchoires adaptées au maintien d'une monture mais que tout autre dispositif de serrage peut être employé, comme par exemple une pince de maintien d'un gabarit de lentille ophtalmique dont le contour externe doit être relevé.

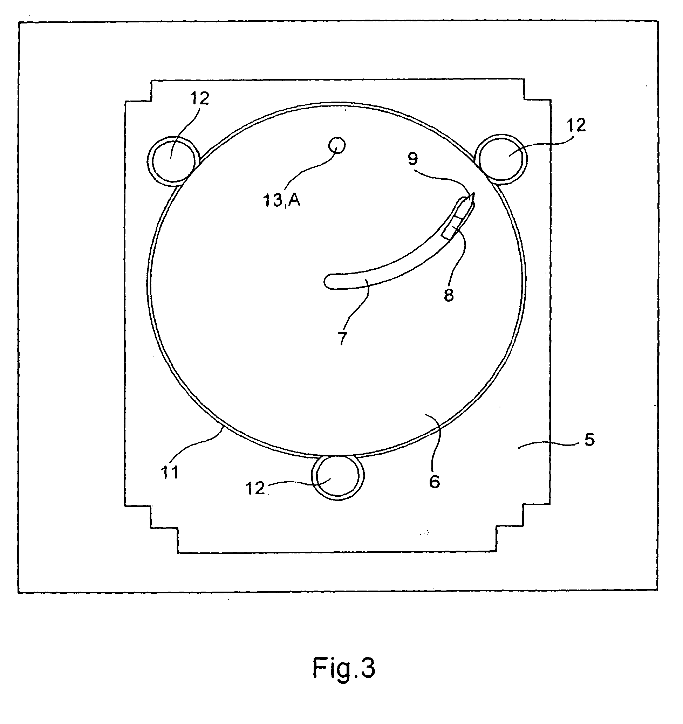

La figure 3 montre la machine 1 vue de dessus lorsque le capot 2 a été enlevé. Le châssis 5 se présente alors comme une table de support dans laquelle une découpe circulaire 11 de diamètre légèrement supérieur au diamètre du plateau tournant 6 a été pratiquée. La découpe circulaire 11 reçoit le plateau tournant 6 qui est guidé par trois galets 12 de guidage disposés régulièrement le long de sa périphérie.

Alternativement, ces galets 12 sont commandés par un moteur-codeur (non représenté) permettant une rotation pilotée du plateau tournant 6 et un relevé de sa position angulaire à tout instant.

On constate sur la figure 3 que, dans cet exemple, la lumière 7 en arc de cercle a une longueur correspondant approximativement au rayon du plateau tournant 6 et s'étend entre le centre du plateau tournant 6 et sa périphérie.

La lumière 7 est de plus centrée autour d'un axe porteur A matérialisé sur cette figure 3 par un rivet 13.

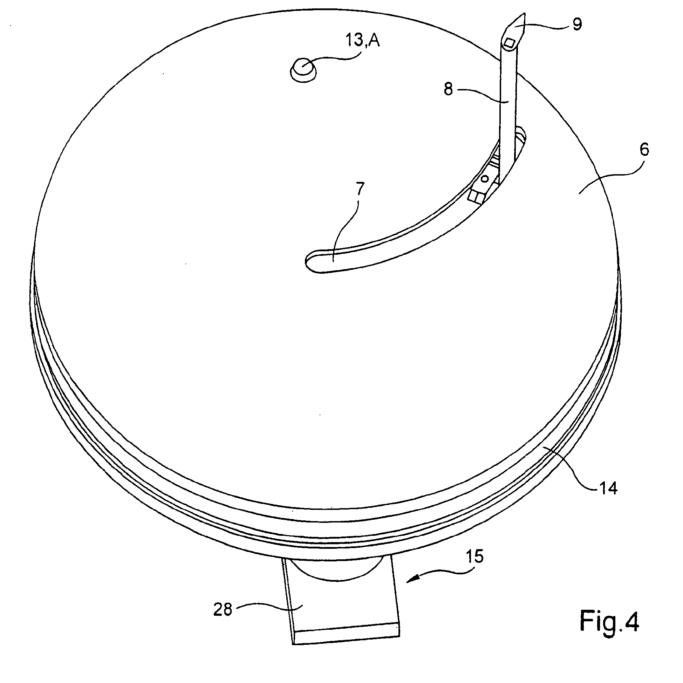

Après démontage de l'appareil 1, le plateau tournant 6 peut être extrait du châssis 5. Il se présente alors tel que représenté à la figure 4.

La vue en perspective de la figure 4 fait apparaître une rainure 14 disposée sur la tranche du plateau tournant 6, sur toute sa circonférence. Cette rainure 14 permet le maintien et l'entraînement du plateau 6 par rapport au châssis 5, grâce aux galets motorisés 12. Le plateau tournant 6 porte un sous-ensemble de lecture 15 qui est caché par la surface du plateau tournant 6 et dont seule une portion est visible sur la figure 4.

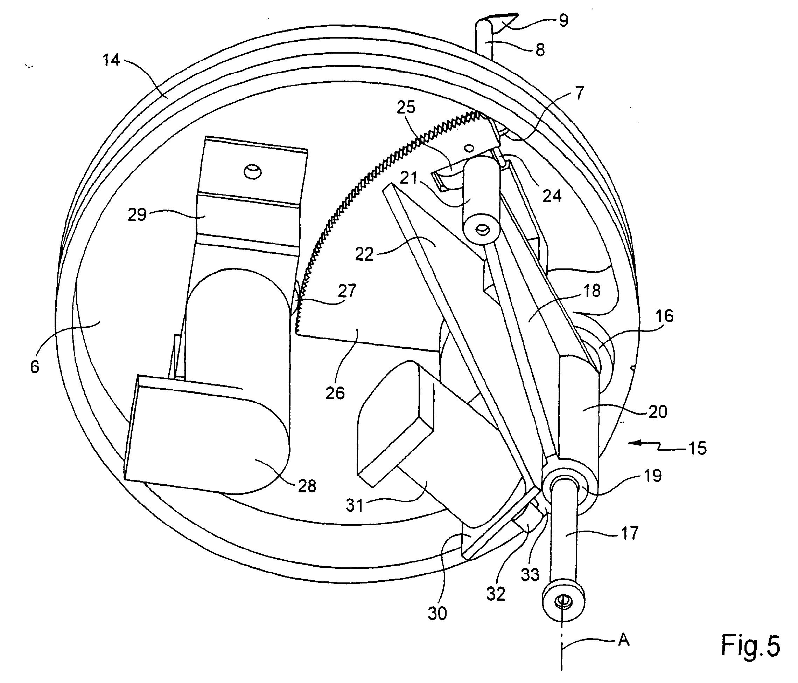

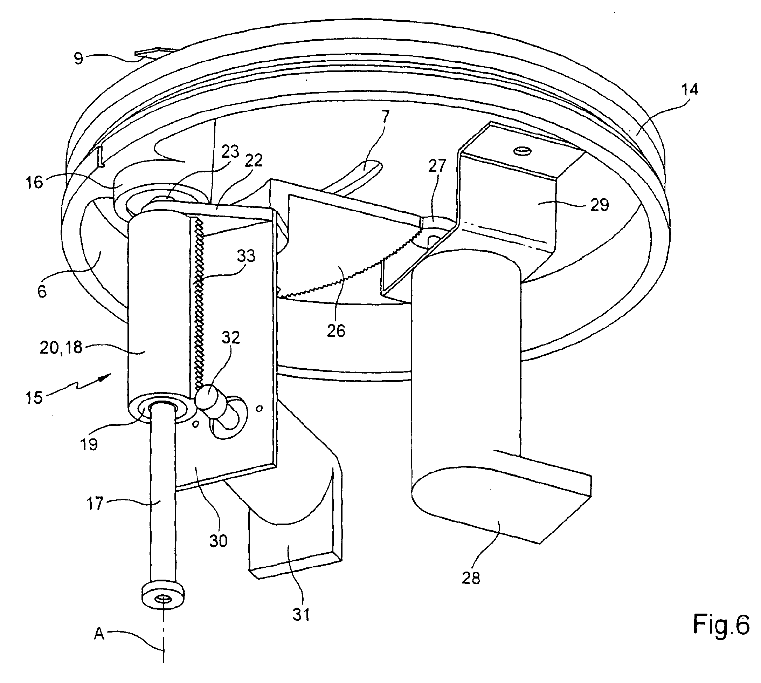

Les figures 5 et 6 montrent le plateau tournant 6 retourné par rapport à la position qu'il occupe sur la figure 4. Ces deux figures permettent de voir le sous-ensemble de lecture 15 selon deux angles de vue différents.

Le sous-ensemble de lecture 15 comporte un palier 16 sur lequel est monté un arbre porteur 17 monté à rotation sur le plateau tournant 6 grâce au roulement 23. Cet arbre 17 définit ainsi un axe porteur A.

En référence à la figure 5, un bras porteur 18 est monté sur l'arbre porteur 17 par l'intermédiaire d'une douille à billes 19. Le bras porteur 18 comporte à l'une de ses extrémités une bague 20 entourant la douille à billes 19 et l'arbre porteur 17, la douille à billes 19 permettant au bras porteur 18 un mouvement de rotation autour de l'axe A ainsi qu'un mouvement de translation le long de cet axe.

A son extrémité opposée à la bague 20, le bras porteur 18 comporte un support cylindrique 21 sur lequel est fixé le palpeur 8 de manière que ce dernier soit parallèle à l'arbre porteur 17.

Ce montage permet au palpeur 8 un mouvement en arc de cercle le long de la lumière 7, dans un plan transversal à l'axe de rotation du plateau tournant 6, cet axe de rotation étant ici parallèle à l'axe A. De plus, le palpeur 8 peut effectuer un mouvement d'entrée/sortie du palpeur par rapport à la surface du plateau tournant 6, lorsque le bras porteur 18 coulisse le long de l'axe A.

Le sous-ensemble de lecture 15 comporte également un bras de guidage 22 rattaché à la base de l'arbre 17. Ce bras de guidage 22 a une longueur suffisante pour atteindre la lumière 7 et comporte, en vis-à-vis de cette lumière 7, un appui fixe 24 et un roulement 25.

L'appui fixe 24 et le roulement 25 sont disposés côte à côte avec un écartement mutuel correspondant sensiblement au diamètre du palpeur 8.

De par le montage en rotation de l'ensemble formé par l'arbre porteur 17 et le bras de guidage 22 sur le plateau tournant 6, l'appui fixe 24 et le roulement 25 restent en vis-à-vis de la lumière 7 quelle que soit la position angulaire du bras de guidage 22 autour de l'axe A. Le bras porteur 18 et le bras de guidage 22 sont disposés de telle sorte que le palpeur 8 est enserré entre l'appui fixe 24 et le roulement 25. Les mouvements angulaires du bras porteur 18 et du bras de guidage 22 autour de l'axe A se font ainsi conjointement.

Le bras de guidage 22 comporte de plus une portion semi-circulaire dentée 26 centrée sur l'axe A. Les dents de la portion semi-circulaire 26 engrènent avec un pignon intermédiaire 27 qui engrène lui-même avec le pignon (non visible) d'un moteur-codeur 28 monté sur une chape 29 qui est fixée sur le plateau tournant 6. Les dents du pignon intermédiaire 27 n'ont pas été représentées pour rendre les dessins plus clairs.

Le bras de guidage 22 comporte de plus une chape verticale 30, disposée parallèlement à l'axe A, sur laquelle est fixé un moteur-codeur 31 dont le pignon 32 engrène avec une crémaillère 33 fixée sur la bague 20 du bras porteur 18. La crémaillère 33 est disposée parallèlement à l'axe A. Les dents du pignon 32 n'ont pas été représentées pour les mêmes raisons de clarté que précédemment.

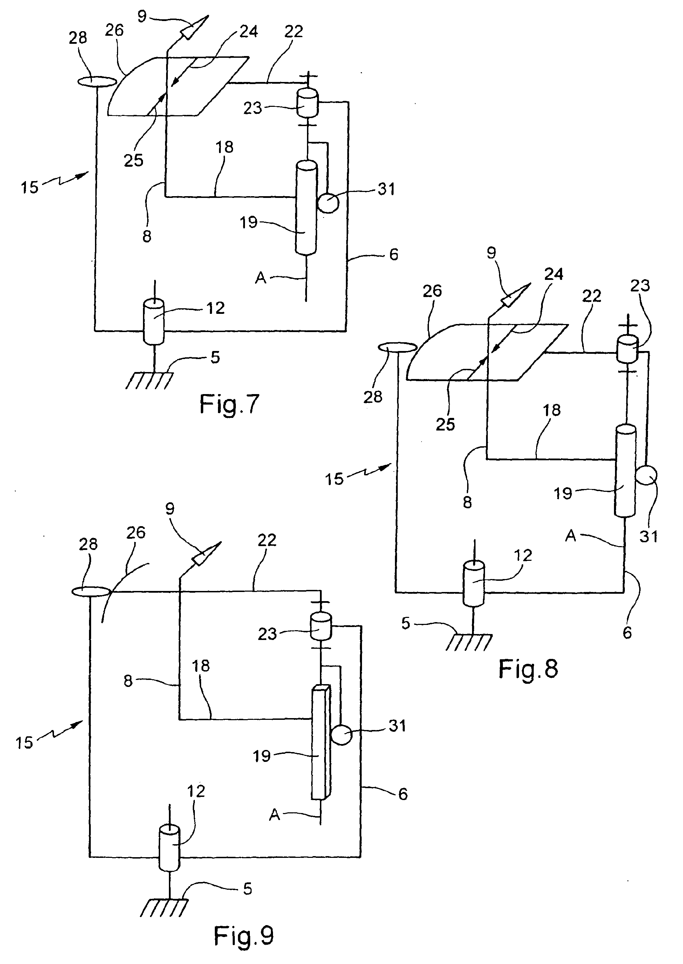

La figure 7 montre de manière schématique les mouvements permis entre les différents éléments du sous-ensemble de lecture 15 et permet de rendre compte des mouvements possibles du palpeur lors du fonctionnement de l'appareil 1.

Les éléments schématiques de la figure 7 ont été numérotés avec les références des pièces réelles auxquelles ils correspondent respectivement, et qui ont été décrites précédemment.

Les galets 12 sont ainsi en mesure de faire pivoter le sous-ensemble de lecture 15 par rapport au châssis fixe 5, le sous-ensemble de lecture 15 étant embarqué sur le plateau tournant 6.

Un mouvement conjoint de rotation autour de l'axe A est également permis au bras de guidage 22 et au bras porteur 18, ce qui permet au bras de guidage 22, entraîné par le moteur 28, d'entraîner lui-même le palpeur 8 en rotation autour de l'axe A, le long de la lumière 7. L'appui fixe 24 permet l'entraînement du bras porteur 18 dans l'un des sens de rotation et le roulement 25 permet cet entraînement dans l'autre sens de rotation. Un jeu de fonctionnement peut être prévu entre le palpeur 8 et ces éléments 24, 25 l'entourant, conformément à cette figure 7.

Alternativement, le bras de guidage 22 peut être monté à rotation sur l'arbre 17, conformément à la figure 8.

Tandis que le bras de guidage 22 est assigné à la commande de la rotation du palpeur 8 autour de l'axe A, le sous-ensemble de lecture 15 dispose d'un mécanisme embarqué permettant simultanément le mouvement du palpeur 8 parallèlement à l'axe A. Le moteur 31 est adapté à disposer la bague 20, et par conséquent le bras porteur 18, à la hauteur désirée sur l'arbre 17.

La lecture d'un contour peut démarrer par la mise en position de la pointe de palpeur 9 contre le contour, en la disposant à la hauteur voulue grâce au moteur 31 et en maintenant le contact entre la pointe 9 et le contour grâce au moteur 28 qui est piloté pour que le palpeur exerce une pression de contact constante contre le contour.

Les galets 12 sont ensuite commandés pour que le plateau tournant 6 effectue un tour complet correspondant au tour complet du contour à palper. Pendant cette rotation, le moteur-codeur 31 est passif et n'agit qu'en tant que codeur pour repérer les positions successives du bras porteur 18 le long de l'axe A (correspondant à la hauteur de la pointe 9 par rapport au plateau 6) pendant que la pointe 9 suit la forme dans laquelle elle est engagée.

Alternativement, le moteur 31, au lieu d'être seulement passif, peut exercer un couple constant sur la douille 20 destiné à réduire artificiellement le poids de l'ensemble formé par le bras porteur 18 et le palpeur 8. Cette compensation de la gravité permet de suivre plus facilement le contour à palper, ce qui a pour conséquence une mesure plus précise.

Une autre alternative consiste à asservir la position du bras porteur 18 le long de l'axe A pendant le suivi du contour. Le moteur 31 n'est donc pas passif mais reçoit en permanence une consigne variable en fonction de l'évolution du contour ou des efforts s'appliquant sur le palpeur 8.

Des variantes de réalisation de l'appareil 1 peuvent être envisagées sans pour autant sortir du cadre de l'invention. Notamment, le bras porteur 18 peut être entraîné en rotation autour de l'axe A en agissant directement sur la bague 20 et en supprimant le bras de guidage 22 (voir figure 9).

## Revendications

1. Appareil de lecture de contour (1), notamment pour cercle de monture de lunettes (10), comportant un support (3, 4) pour le maintien de l'article dont le contour est à lire et un plateau tournant (6) monté à rotation par rapport au support (3, 4) autour d'un axe de rotation, ce plateau tournant (6) portant un sous-ensemble de lecture (15) qui comporte un palpeur (8) mobile d'une part selon une direction parallèle à l'axe de rotation du plateau tournant (6) et d'autre part selon un plan transversal à l'axe de rotation du plateau tournant (6),
cet appareil de lecture (1) étant **caractérisé en ce que** le sous-ensemble de lecture (15) comporte en outre :
un axe de rotation dénommé axe porteur (A) transversal à la surface du plateau tournant (6) ;
un bras porteur (18) qui, à l'une de ses extrémités, est monté tournant autour dudit axe porteur (A) et sur lequel est embarqué, à l'autre de ses extrémités, ledit palpeur (8) ;
grâce à quoi le palpeur (8) est mobile par rapport au plateau tournant (6) suivant un trajet en arc de cercle centré sur ledit axe porteur (A).

2. Appareil de lecture de contour selon la revendication 1, **caractérisé en ce que** le plateau tournant (6) comporte sur sa surface une lumière semi-circulaire (7) centrée autour de l'axe porteur (A), le bras porteur (18) étant disposé de sorte que le palpeur (8) traverse la lumière semi-circulaire (7).

3. Appareil de lecture de contour selon l'une des revendications 1 ou 2, **caractérisé en ce que** la lumière semi-circulaire (7) s'étend entre le centre de rotation du plateau tournant (6) et sa périphérie.

4. Appareil de lecture de contour selon l'une des revendications 1 à 3, **caractérisé en ce que** le bras porteur (18) coopère avec des moyens d'entraînement angulaires adaptés à commander le mouvement du palpeur (8) selon ledit plan transversal à l'axe de rotation du plateau tournant (6).

5. Appareil de lecture de contour selon la revendication 4, **caractérisé en ce que** les moyens d'entraînement angulaires comportent un bras de guidage (22) dont une extrémité est centrée sur l'axe porteur (A) et l'autre extrémité comporte des moyens de commande coopérant avec l'ensemble formé par le palpeur (8) et le bras porteur (18).

6. Appareil de lecture de contour selon la revendication 5, **caractérisé en ce que** les moyens de commande comportent un roulement (25).

7. Appareil de lecture de contour selon l'une des revendications 5 ou 6, **caractérisé en ce que** les moyens de commande comportent un appui fixe (24).

8. Appareil de lecture de contour selon l'une des revendications 5 à 7, **caractérisé en ce que** le bras de guidage (22) est centré sur l'axe porteur (A) par l'intermédiaire d'un roulement (23).

9. Appareil de lecture de contour selon l'une des revendications 5 à 8, **caractérisé en ce que** le bras de guidage (22) comporte une portion semi-circulaire (26) centrée autour de l'axe porteur (A).

10. Appareil de lecture de contour selon la revendication 9, **caractérisé en ce qu'**il comporte en outre un moteur d'entraînement angulaire (28) coopérant avec ladite portion semi-circulaire (26) pour entraîner en rotation autour de l'axe porteur (A) le bras de guidage (22).

11. Appareil de lecture de contour selon la revendication 10, **caractérisé en ce que** la portion semi-circulaire (26) est dentée et engrène avec un pignon du moteur d'entraînement angulaire (28).

12. Appareil de lecture de contour selon la revendication 10, **caractérisé en ce que** la portion semi-circulaire (26) est dentée et engrène avec un pignon intermédiaire (27) qui engrène lui-même avec un pignon du moteur d'entraînement angulaire (28).

13. Appareil de lecture de contour selon l'une des revendications 5 à 12, **caractérisé en ce qu'**il comporte en outre un codeur (28) coopérant avec le bras de guidage (22) pour repérer la position angulaire du bras de guidage (22) autour de l'axe porteur (A).

14. Appareil de lecture de contour selon l'une des revendications 1 à 13, **caractérisé en ce que** le bras porteur (18) coopère avec des moyens d'entraînement axial adaptés à commander le mouvement du palpeur (8) selon ladite direction parallèle à l'axe de rotation du plateau tournant (6).

15. Appareil de lecture de contour selon la revendication 14, **caractérisé en ce que** les moyens d'entraînement axial comportent un moteur d'entraînement axial (31) adapté à déplacer le bras porteur (18) le long de l'axe porteur (A).

16. Appareil de lecture de contour selon la revendication 15, **caractérisé en ce que** le moteur d'entraînement axial (31) comporte un pignon (32) engrenant sur une crémaillère (33) solidaire d'une bague (20) rattachée au bras porteur (18) et entourant l'axe porteur (A).

17. Appareil de lecture de contour selon l'une des revendications 15 ou 16, **caractérisé en ce que** le moteur d'entraînement axial (31) est adapté à positionner le bras porteur (18) le long de l'axe porteur (A) selon une consigne variable.

18. Appareil de lecture de contour selon l'une des revendications 15 à 17, **caractérisé en ce que** le moteur d'entraînement axial (31) est adapté à réaliser une compensation de la force de gravité.

19. Appareil de lecture de contour selon l'une des revendications 15 à 18 lorsqu'elles dépendent directement ou indirectement de la revendication 5, **caractérisé en ce que** le moteur d'entraînement axial (31) est monté sur le bras de guidage (22).

20. Appareil de lecture de contour selon l'une des revendications 1 à 19, **caractérisé en ce qu'**il comporte en outre un codeur (31) coopérant avec le bras porteur (18) pour repérer la position axiale du bras porteur (18) le long de l'axe porteur (A).

21. Appareil de lecture de contour selon l'une des revendications 1 à 20, **caractérisé en ce que** l'axe porteur (A) est défini par un arbre (17) fixé perpendiculairement à la surface du plateau tournant (6).

22. Appareil de lecture de contour selon la revendication 21, **caractérisé en ce que** ledit arbre (17) a une section prismatique adaptée à entraîner le bras porteur (18) en rotation autour de l'axe porteur (A).

23. Appareil de lecture de contour selon l'une des revendications 1 à 22, **caractérisé en ce que** le palpeur (8), l'axe porteur (A) et l'axe de rotation du plateau tournant (6) sont parallèles.

24. Appareil de lecture de contour selon l'une des revendications 1 à 23, **caractérisé en ce que** le bras porteur (18) est centré sur l'axe porteur (A) par l'intermédiaire d'une douille à billes (19) permettant la translation et la rotation du bras porteur (18) par rapport à l'axe porteur (A).

## Claims

1. Contour reading device (1), in particular for eyeglass frame (10) rims, including a support (3, 4) for holding an article whose contour is to be read and a turntable (6) that is rotatable relative to the support (3, 4) about a rotation axis and carries a reading subassembly (15) that includes a feeler (8) mobile in a direction parallel to the rotation axis of the turntable (6) and in a plane transverse to the rotation axis of the turntable (6),
which reading device (1) is **characterised in that** the reading subassembly (15) further includes:
a rotation axis (A) referred to as the carrier axis transverse to the surface of the turntable (6),
a carrier arm (18) which is mounted at one end to turn about said carrier axis (A) and at the other end of which said feeler (8) is mounted, whereby the feeler (a) is mobile: relative to the turntable (6) along a circular arc path centred on said carrier axis (A).

2. Contour reading device according to claim 1, **characterised in that** the turntable (6) has on its surface a semicircular slot (7) centred on the carrier axis (A) and the carrier arm (18) is disposed so that the feeler (a) passes through the semicircular slot (7).

3. Contour reading device according to either claim 1 or claim 2, **characterised in that** the semicircular slot (7) extends between the rotation centre of the turntable (6) and its periphery.

4. Contour reading device according to any one of claims 1 to 3, **characterised in that** the carrier arm (18) cooperates with angular drive means adapted to drive the movement of the feeler (8) in said plane transverse to the rotation axis of the turntable (6),

5. Contour reading device according to claim 4,
**characterised in that** the angular drive means include a guide arm (22) one end of which is centred on the carrier axis (A) and the other end of which includes drive means cooperating with the combination of the feeler (8) and the carrier arm (18).

6. Contour reading device according to claim 5, **characterised in that** the drive means include a rolling bearing (25).

7. Contour reading device according to either claim 5 or claim 6, **characterised in that** the drive means include a fixed bearing (24).

8. Contour reading device according to any one of claims 5 to 7, **characterised in that** the guide arm (22) is centred on the carrier axis (A) by means of a rolling bearing (23).

9. Contour reading device according to any one of claims 5 to 8, **characterised in that** the guide arm (22) has a semicircular portion (26) centred on the carrier axis (A).

10. Contour reading device according to claim 9, **characterised in that** it further includes an angular drive motor (28) cooperating with said semicircular portion (26) to drive rotation of the guide arm (22) about the carrier axis (A).

11. Contour reading device according to claim 10, **characterised in that** the semicircular portion (26) is toothed and meshes with a pinion of the angular drive motor (28).

12. Contour reading device according to claim 10, **characterised in that** the semicircular portion (26) is toothed and meshes with an intermediate pinion (27) that meshes with a pinion of the angular drive motor (28).

13. Contour reading device according to any one of claims 5 to 12, **characterised in that** it further includes an encoder (28) cooperating with the guide arm (22) to measure the angular position of the guide arm (22) about the carrier axis (A).

14. Contour reading device according to any one of claims 1 to 13, **characterised in that** the carrier arm (18) cooperates with axial drive means adapted to drive the movement of the feeler (8) in said direction parallel to the rotation axis of the turntable (6).

15. Contour reading device according to claim 14, **characterised in that** the axial drive means include an axial drive motor (31) adapted to move the carrier arm (18) along the carrier axis (A).

16. Contour reading device according to claim 15, **characterised in that** the axial drive motor (31) includes a pinion (32) meshing with a rack (33) fastened to a ring (20) attached to the carrier arm (16) and surrounding the carrier axis (A).

17. Contour reading device according to either claim 15 or claim 16, **characterised in that** the axial drive motor (31) is adapted to position the carrier arm (18) along the carrier axis (A) in accordance with a varying set point.

18. Contour reading device according to any one of claims 15 to 17, **characterised in that** the axial drive motor (31) is adapted to compensate the force of gravity.

19. Contour reading device according to any one of claims 15 to 18 when directly or indirectly dependent on claim 5, **characterised in that** the axial drive motor (31) is mounted on the guide arm (22).

20. Contour reading device according to any one of claims 1 to 19, **characterised in that** it further includes an encoder (31) cooperating with the carrier arm (18) to indicate the axial position of the carrier arm (18) along the carrier axis (A).

21. Contour reading device according to any one of claims 1 to 20, **characterised in that** the carrier axis (A) is defined by a shaft (17) fixed perpendicularly to the surface of the turntable (6).

22. Contour reading device according to claim 21, **characterised in that** said shaft (17) has a prismatic cross section adapted to drive the carrier arm (18) in rotation about the carrier axis (A).

23. Contour reading device according to any one of claims 1 to 22, **characterised in that** the feeler (8), the carrier axis (A) and the rotation axis of the turntable (6) are parallel.

24. Contour reading device according to any one of claims 1 to 23, **characterised in that** the carrier arm (18) is centred on the carrier axis (A) by means of a ball bush (19) enabling movement in translation and rotation of the carrier arm (18) relative to the carrier axis (A).

## Patentansprüche

1. Konturlesevorrichtung (1), insbesondere für Kreise von Brillengestellen (10), umfassend eine Halterung (3, 4) zum Halten des Gegenstands, dessen Kontur zu lesen ist und eine bezüglich der Halterung (3, 4) um eine Rotationsachse drehende Drehplatte (6), wobei diese Drehplatte (6) eine Lese-Untereinheit (15) trägt, welche einen Fühler (8) aufweist, welcher einerseits entlang einer Richtung parallel zu der Rotationssache der Drehplatte (6) und andererseits entlang einer Ebene transversal zu der Rotationssache des Drehplatte (6) beweglich ist,
wobei die Lesevorrichtung (1) **dadurch gekennzeichnet ist, dass** die Lese-Untereinheit (15) zudem umfasst;
eine Trägerachse (A) genannte Rotationssachse transversal zu der Fläche der Drehplatte (6);
einen Trägerarm (18), welcher an einem seiner Enden drehbar um die Trägerachse (A) angeordnet ist und bei welchem der Fühler (8) an dem anderen seiner Enden aufgenommen ist;
aufgrund dessen der Fühler (8) beweglich bezüglich der Drehplatte (6) entlang einer auf der Trägerachse (A) zentrierten Kreisbogenlinie ist.

2. Konturlesevorrichtung gemäß Anspruch 1, **dadurch gekennzeichnet, dass** die Drehplatte (6) an ihrer Fläche eine halbkreisförmige Öffnung (7), zentriert um die Trägerachse (A), umfasst, wobei der Trägerarm (18) so angeordnet ist, dass der Fühler (8) die halbkreisförmige Öffnung (7) durchquert.

3. Konturlesevorrichtung gemäß einem der Ansprüche 1 oder 2, **dadurch gekennzeichnet, dass** sich die halbkreisförmige Öffnung (7) zwischen dem Drehpunkt der Drehplatte (6) und ihrem Umfang erstreckt.

4. Konturlesevorrichtung gemäß einem der Ansprüche 1 bis 3, **dadurch gekennzeichnet, dass** der Trägerarm (18) mit einer Winkelantriebseinrichtung zusammenwirkt, welche dazu ausgelegt ist, die Bewegung des Fühlers (8) entlang der Ebene transversal zu der Rotationsachse der Drehplatte (6) zu steuern.

5. Konturlesevorrichtung gemäß Anspruch 4, **dadurch gekennzeichnet, dass** die Winkelantriebseinrichtung einen Führungsarm (22) umfasst, dessen eines Ende auf der Trägerachse (A) zentriert ist und dessen anderes Ende eine Steuereinrichtung umfasst, welche mit der aus dem Fühler (8) und dem Trägerarm (18) gebildeten Einheit zusammenwirken.

6. Konturlesevorrichtung gemäß Anspruch 5, **dadurch gekennzeichnet, dass** die Steuereinrichtung ein Lager (25) umfasst.

7. Konturlesevorrichtung gemäß einem der Ansprüche 5 oder 6, **dadurch gekennzeichnet, dass** die Steuerrintichtung ein festes Auflager (24) umfasst.

8. Konturlesevorrichtung gemäß einem der Ansprüche 5 bis 7, **dadurch gekennzeichnet, dass** der Führungsarm (22) auf der Trägerachse (A) mittels eines Lagers (23) zentriert ist.

9. Konturlesevorrichtung gemäß einem der Ansprüche 5 bis 8, **dadurch gekennzeichnet, dass** der Führungsarm (22) einen halbkreisförmigen Abschnitt (26), zentriert um die Trägerachse (A), umfasst.

10. Konturlesevorrichtung gemäß Anspruch 9, **dadurch gekennzeichnet, dass** sie zudem einen Winkelantriebsmotor (28) umfasst, welcher mit dem halbkreisförmigen Abschnitt (26) zusammenwirkt, um den Führungsarm (22) in eine Drehbewegung um die Trägerachse (A) zu versetzen.

11. Koaturlesevorrichtung gemäß Anspruch 10, **dadurch gekennzeichnet, dass** der halbkreisförmige Abschnitt (26) gezahnt ist und mit einem Zahnrad des Winkelantriebsmotors (28) in Eingriff ist.

12. Konturlesevorrichtung gemäß Anspruch 10, **dadurch gekennzeichnet, dass** der halbkreisförmige Abschnitt (26) gezahnt ist und mit einem Zwischenzahnrad (27) in Eingriff ist, welches wiederum mit einem Zahnrad des Winkelantriebsmotors (28) in Eingriff ist.

13. Konturlesevorrichtung gemäß einem der Ansprüche 5 bis 12, **dadurch gekennzeichnet, dass** sie zudem einen Codiereinrichtung (28) umfasst, welche mit dem Führungsarm (22) zusammenwirkt, um die Winkelposition des der Führungsarmes (22) um die Trägerachse (A) zu finden.

14. Konturlesevorrichtung gemäß einem der Ansprüche 1 bis 13, **dadurch gekennzeichnet, dass** der Trägerarm (18) mit einer axialen Antriebseinrichtung zusammenwirkt, welche dazu geeignet ist, die Bewegung des Fühlers (8) entlang der Richtung parallel zu der Rotationsachse der Drehplatte (6) zu steuern.

15. Konturlesevorrichtung gemäß Anspruch 14, **dadurch gekennzeichnet, dass** die axiale Antriebseinrichtung einen axialen Antriebsmotor (31) umfasst, der dazu ausgelegt ist, den Trägerarm (18) entlang der Trägerachse (A) zu versetzen.

16. Konturlesevorrichtung gemäß Anspruch 15, **dadurch gekennzeichnet, dass** der axiale Antriebsmotor (31) ein Zahnrad (32) umfasst, welches mit einer Zahnstange (33) in Eingriff ist, welche mit einem an dem Trägerarm (18) angeordneten und die Trägerachse (A) umgebenden Ring (20) verbundenen ist.

17. Konturlesevorrichtung gemäß einem der Ansprüche 15 oder 16, **dadurch gekennzeichnet, dass** der axiale Antriebsmotor (31) dazu ausgelegt ist, dem Trägerarm (18) entlang der Trägerachse (A) gemäß einer variablen Größe zu positionieren.

18. Konturlesevorrichtung gemäß einem der Ansprüche 15 bis 17, **dadurch gekennzeichnet, dass** der axiale Antriebsmotor (31) dazu ausgelegt ist eine Kompensation der Gravitationskraft zu realisieren.

19. Konturlesevorrichtung gemäß einem der Ansprüche 15 bis 18, wenn sie direkt oder indirekt von Anspruch 5 abhängen, **dadurch gekennzeichnet, dass** der axiale Antriebsmotor (31) an dem Führungsarm (22) angeordnet ist,

20. Konturlesevorrichtung gemäß einem der Ansprüche 1 bis 19, **dadurch gekennzeichnet, dass** sie zudem eine Codiereinrichtung (31) umfasst, welche mit dem Trägerarm (18) zusammenwirkt um die axiale Position des Trägerarm (18) entlang der Trägerachse (A) zu finden.

21. Konturlesevorrichtung gemäß einem der Ansprüche 1 bis 20, **dadurch gekennzeichnet, dass** die Trägerachse (A) durch eine Welle (17) definiert ist, welche senkrecht zu der Fläche der Drehplatte (6) angeordnet ist.

22. Konturlesevorrichtung gemäß Anspruch 21, **dadurch gekennzeichnet, dass** die Welle (17) eine prismatischen Abschnitt hat, welcher dazu ausgelegt ist, den Trägerarm (18) eine Drehbewegung um die Trägerachse (A) zu versetzen.

23. Konturlesevorrichtung gemäß einem der Ansprüche 1 bis 22, **dadurch gekennzeichnet, dass** der Fühler (8), die Trägerachse (A) und die Rotationsachse der Drehplatte(6) parallel sind.

24. Konturlesevorrichtung gemäß einem der Ansprüche 1 bis 23, **dadurch gekennzeichnet, dass** der Trägerarm (18) auf der Trägerachse (A) mittels eines Kugellagers (19) zentriert ist, welches eine Translation und Rotation des Trägerarms (18) bezüglich der Trägerachse (A) erlaubt.
